# EUROPEAN PATENT APPLICATION

(11) **EP 4 546 878 A1**
(43) Date of publication of application: **30.04.2025**
(21) Application number: 24207912.7
(22) Date of filing: 21.10.2024
(51) Int. Cl.: H04W 48/16, H04W 48/18, H04W 48/20

(54) **PRECISE NETWORK SEARCHING BASED ON LOCATION**

(30) Priority: 24.10.2023 US 202318383391
(71) Applicant: T-Mobile Innovations LLC, Bellevue, WA 98006 (US)
(72) Inventor: SIDDIQUE, Zaheer Mohammed, Overland Park, 66223 (US); SIRYY, Maksym, Overland Park, 66013 (US)
(74) Representative: Suddaby, Mark Edward

(57) **Abstract**

Embodiments of the present disclosure are directed to systems and methods for improved cell search based on a location of a user equipment (UE). By querying a locally-stored dataset to identify one or more cell search parameters associated with the location of the UE, the UE may perform a targeted cell search. The targeted cell search may be based on one or more of a frequency band, radio access technology, and a network identifier (e.g., a public land mobile network (PLMN) identifier).

## Description

### SUMMARY

The present disclosure is directed to improving cell search procedures of a user equipment (UE), substantially as shown and/or described in connection with at least one of the Figures, and as set forth more completely in the claims.

According to various aspects of the technology, a UE performs a targeted cell search at least partially based on its location and one or more frequency bands associated with its determined location. Cell search, selection, and reselection are some of the most intensely battery-consuming activities a UE can perform in a modern telecommunications network. Particularly in instances where a UE has travelled to areas where its home PLMN is not available, a UE may exhaust its initial cell search of home-carrier-defined bands and perform an all-band search. Performing an all-band cell search is a processor-intense procedure, consuming significant amounts of computer processing resources and, particularly on smaller form UEs, limited battery resources. By performing a targeted cell search based on location instead of an all-band search, a UE will realize significant power conservation by way of less processing resource utilization.

This summary is provided to introduce a selection of concepts in a simplified form that are further described below in the detailed description. This summary is not intended to identify key features or essential features of the claimed subject matter, nor is it intended to be used in isolation as an aid in determining the scope of the claimed subject matter.

### BRIEF DESCRIPTION OF THE DRAWINGS

Aspects of the present disclosure are described in detail herein with reference to the attached Figures, which are intended to be exemplary and non-limiting, wherein:
Fig. 1 illustrates an exemplary computing device for use with the present disclosure;
Fig 2. illustrates an exemplary environment in which implementations of the present disclosure may be employed;
Fig. 3 depicts a flow diagram of an exemplary method for efficient cell searching, in accordance with embodiments described herein;
Fig. 4 depicts a flow diagram of an exemplary method for efficient cell searching, in accordance with embodiments described herein; and
Fig. 5 illustrates an exemplary portion of a dataset for use with the present disclosure.

### DETAILED DESCRIPTION

The subject matter of embodiments of the invention is described with specificity herein to meet statutory requirements. However, the description itself is not intended to limit the scope of this patent. Rather, the inventors have contemplated that the claimed subject matter might be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

Various technical terms, acronyms, and shorthand notations are employed to describe, refer to, and/or aid the understanding of certain concepts pertaining to the present disclosure. Unless otherwise noted, said terms should be understood in the manner they would be used by one with ordinary skill in the telecommunication arts. An illustrative resource that defines these terms can be found in Newton's Telecom Dictionary, (e.g., 32d Edition, 2022). As used herein, the term "base station" refers to a centralized component or system of components that is configured to wirelessly communicate (receive and/or transmit signals) with a plurality of stations (i.e., wireless communication devices, also referred to herein as user equipment (UE(s))) in a particular geographic area. As used herein, the term "network access technology (NAT)" is synonymous with wireless communication protocol and is an umbrella term used to refer to the particular technological standard/protocol that governs the communication between a UE and a base station; examples of network access technologies include 3G, 4G, 5G, 6G, 802.11x, and the like.

Embodiments of the technology described herein may be embodied as, among other things, a method, system, or computer-program product. Accordingly, the embodiments may take the form of a hardware embodiment, or an embodiment combining software and hardware. An embodiment takes the form of a computer-program product that includes computer-useable instructions embodied on one or more computer-readable media that may cause one or more computer processing components to perform particular operations or functions.

Computer-readable media include both volatile and nonvolatile media, removable and nonremovable media, and contemplate media readable by a database, a switch, and various other network devices. Network switches, routers, and related components are conventional in nature, as are means of communicating with the same. By way of example, and not limitation, computer-readable media comprise computer-storage media and communications media.

Computer-storage media, or machine-readable media, include media implemented in any method or technology for storing information. Examples of stored information include computer-useable instructions, data structures, program modules, and other data representations. Computer-storage media include, but are not limited to RAM, ROM, EEPROM, flash memory or other memory technology, CD-ROM, digital versatile discs (DVD), holographic media or other optical disc storage, magnetic cassettes, magnetic tape, magnetic disk storage, and other magnetic storage devices. These memory components can store data momentarily, temporarily, or permanently.

Communications media typically store computer-useable instructions - including data structures and program modules - in a modulated data signal. The term "modulated data signal" refers to a propagated signal that has one or more of its characteristics set or changed to encode information in the signal. Communications media include any information-delivery media. By way of example but not limitation, communications media include wired media, such as a wired network or direct-wired connection, and wireless media such as acoustic, infrared, radio, microwave, spread-spectrum, and other wireless media technologies. Combinations of the above are included within the scope of computer-readable media.

By way of background, before a user equipment (UE) can select and attach to a cellular base station, it must identify available one or more suitable base stations to which it could attach. The UE identifies one or more suitable base stations by searching frequencies available to the UE; cell search can be resource intensive, often requiring the UE to tune to a broad range of frequencies and monitor each frequency in order to receive and decode multiple signals. The longer that a UE takes to perform cell search, the more processing and power resources the UE consumes. At a high level, cell search includes tuning to a frequency, monitoring the frequency for one or more synchronization signals (e.g., a master information block (MIB)) transmitted from a cell, decoding the one or more synchronization signals, determining that the cell is suitable (e.g., is not barred), and then listening for/decoding one or more additional signals to process any additional minimum system information (e.g., system information block one (SIB1)).

Conventionally, a UE will perform cell search in an area where it's home public land mobile network (PLMN) is available; accordingly, the UE is configured to perform cell search by tuning to each of frequency band of a set of carrier-defined bands. By limiting default cell search to the carrier-defined set of frequencies, the UE need only tune to and monitor a small subset of the very large pool of frequencies that are supported by the UE. When in an area served by its home PLMN, cell search of the carrier-defined set of frequency bands should be successful and allow the UE to select and camp on a cell of its home carrier. Whether due to an outage or when the UE is an area that is not served by cells of its home PLMN (e.g., when traveling internationally), cell searching the carrier-defined set of bands may not identify any suitable cells to which the UE could connect; in that case, UEs are conventionally configured to perform a cell search on every frequency that is supported by the device. Such backup cell searching, referred to herein as an all-band cell search, is extremely resource intensive - a problem that can cause UEs with limited processing capacities to perform adversely. Persistent or repeated all-band cell searching without connection to an external power supply or frequent re-charging will also rapidly deplete the limited battery capacity of the UE.

Unlike conventional solutions, the present disclosure is directed to an improved paradigm for cell searching that is based on the location of the UE. A dataset, stored locally on the UE, is queried with a location determined by the UE, in order to identify one or more sets of frequency bands that the UE should target in that particular area for cell searching. Using one or more sets of location-based frequencies has the effect of allowing the UE to perform cell search with a high degree of efficiency, enabling the UE to identify a suitable cell even when the UE is not located in an area served by its home PLMN - preventing a resource-intensive all-band search.

Accordingly, a first aspect of the present disclosure is directed to a system for location-based cell searching. The system comprises one or more antennas configured to receive one or more downlink signals from a base station. The system further comprises one or more computer processing components configured to determine a location of a user equipment (UE). The one or more computer processing components are further configured to query a dataset stored locally on the UE to identify one or more cell search parameters associated with the location. The one or more computer processing components are further configured to perform a cell search using the one or more cell search parameters.

A second aspect of the present disclosure is directed to a method for performing location-based cell searching. The method comprises determining a location of a user equipment (UE). The method further comprises selecting a first predefined area from a plurality of predefined areas, the first predefined area associated with the location of the UE. The method further comprises querying a dataset stored locally on the UE to identify a first set of frequency bands associated with the first predefined area. The method further comprises performing a cell search by tuning to the first set of frequency bands.

Another aspect of the present disclosure is directed to a non-transitory computer readable media having instructions stored thereon that, when executed by one or more computer processing components, cause the one or more computer processing components to perform a method for location-based cell search. The method comprises determining a location of a user equipment (UE). The method further comprises selecting a first predefined area from a plurality of predefined areas, the first predefined area associated with the location of the UE. The method further comprises querying a dataset stored locally on the UE to identify one or more cell search parameters associated with the location. The method further comprises performing a cell search using the one or more cell search parameters.

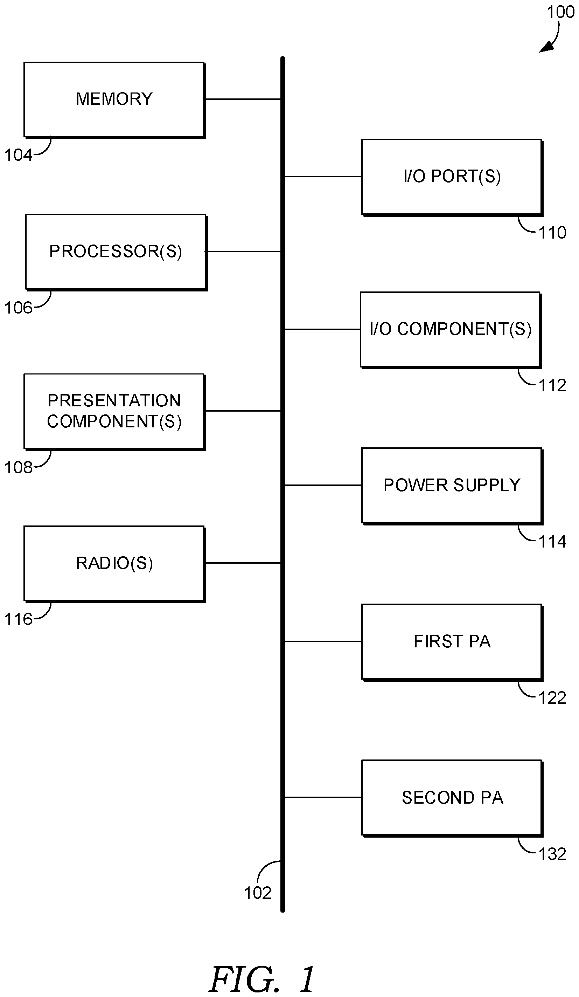

Referring to FIG. 1, an exemplary computer environment is shown and designated generally as computing device 100 that is suitable for use in implementations of the present disclosure. Computing device 100 is but one example of a suitable computing environment and is not intended to suggest any limitation as to the scope of use or functionality of the invention. Neither should computing device 100 be interpreted as having any dependency or requirement relating to any one or combination of components illustrated. In aspects, the computing device 100 is generally defined by its capability to transmit one or more signals to an access point and receive one or more signals from the access point (or some other access point); the computing device 100 may be referred to herein as a user equipment, wireless communication device, or user device, The computing device 100 may take many forms; non-limiting examples of the computing device 100 include a fixed wireless access device, cell phone, tablet, internet of things (IoT) device, smart appliance, automotive or aircraft component, pager, personal electronic device, wearable electronic device, activity tracker, desktop computer, laptop, PC, and the like.

The implementations of the present disclosure may be described in the general context of computer code or machine-useable instructions, including computer-executable instructions such as program components, being executed by a computer or other machine, such as a personal data assistant or other handheld device. Generally, program components, including routines, programs, objects, components, data structures, and the like, refer to code that performs particular tasks or implements particular abstract data types. Implementations of the present disclosure may be practiced in a variety of system configurations, including handheld devices, consumer electronics, general-purpose computers, specialty computing devices, etc. Implementations of the present disclosure may also be practiced in distributed computing environments where tasks are performed by remote-processing devices that are linked through a communications network.

With continued reference to FIG. 1, computing device 100 includes bus 102 that directly or indirectly couples the following devices: memory 104, one or more processors 106, one or more presentation components 108, input/output (I/O) ports 110, I/O components 112, and power supply 114. Bus 102 represents what may be one or more busses (such as an address bus, data bus, or combination thereof). Although the devices of FIG. 1 are shown with lines for the sake of clarity, in reality, delineating various components is not so clear, and metaphorically, the lines would more accurately be grey and fuzzy. For example, one may consider a presentation component such as a display device to be one of I/O components 112. Also, processors, such as one or more processors 106, have memory. The present disclosure hereof recognizes that such is the nature of the art, and reiterates that FIG. 1 is merely illustrative of an exemplary computing environment that can be used in connection with one or more implementations of the present disclosure. Distinction is not made between such categories as "workstation," "server," "laptop," "handheld device," etc., as all are contemplated within the scope of FIG. 1 and refer to "computer" or "computing device."

Computing device 100 typically includes a variety of computer-readable media. Computer-readable media can be any available media that can be accessed by computing device 100 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data. Computer storage media includes RAM, ROM, EEPROM, flash memory or other memory technology, CD-ROM, digital versatile disks (DVD) or other optical disk storage, magnetic cassettes, magnetic tape, magnetic disk storage or other magnetic storage devices. Computer storage media of the computing device 100 may be in the form of a dedicated solid state memory or flash memory, such as a subscriber information module (SIM). Computer storage media does not comprise a propagated data signal.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 104 includes computer-storage media in the form of volatile and/or nonvolatile memory. Memory 104 may be removable, nonremovable, or a combination thereof. Exemplary memory includes solid-state memory, hard drives, optical-disc drives, etc. Computing device 100 includes one or more processors 106 that read data from various entities such as bus 102, memory 104 or I/O components 112. One or more presentation components 108 presents data indications to a person or other device. Exemplary one or more presentation components 108 include a display device, speaker, printing component, vibrating component, etc. I/O ports 110 allow computing device 100 to be logically coupled to other devices including I/O components 112, some of which may be built in computing device 100. Illustrative I/O components 112 include a microphone, joystick, game pad, satellite dish, scanner, printer, wireless device, etc.

A first radio 120 and second radio 130 represent radios that facilitate communication with one or more wireless networks using one or more wireless links. In aspects, the first radio 120 utilizes a first transmitter 122 to communicate with a wireless network on a first wireless link and the second radio 130 utilizes the second transmitter 132 to communicate on a second wireless link. Though two radios are shown, it is expressly conceived that a computing device with a single radio (i.e., the first radio 120 or the second radio 130) could facilitate communication over one or more wireless links with one or more wireless networks via both the first transmitter 122 and the second transmitter 132. Illustrative wireless telecommunications technologies include CDMA, GPRS, TDMA, GSM, and the like. One or both of the first radio 120 and the second radio 130 may carry wireless communication functions or operations using any number of desirable wireless communication protocols, including 802.11 (Wi-Fi), WiMAX, LTE, 3G, 4G, LTE, 5G, NR, VoLTE, or other VoIP communications. In aspects, the first radio 120 and the second radio 130 may be configured to communicate using the same protocol but in other aspects they may be configured to communicate using different protocols. In some embodiments, including those that both radios or both wireless links are configured for communicating using the same protocol, the first radio 120 and the second radio 130 may be configured to communicate on distinct frequencies or frequency bands (e.g., as part of a carrier aggregation scheme). As can be appreciated, in various embodiments, each of the first radio 120 and the second radio 130 can be configured to support multiple technologies and/or multiple frequencies; for example, the first radio 120 may be configured to communicate with a base station according to a cellular communication protocol (e.g., 4G, 5G, 6G, or the like), and the second radio 130 may configured to communicate with one or more other computing devices according to a local area communication protocol (e.g., IEEE 802.11 series, Bluetooth, NFC, z-wave, or the like).

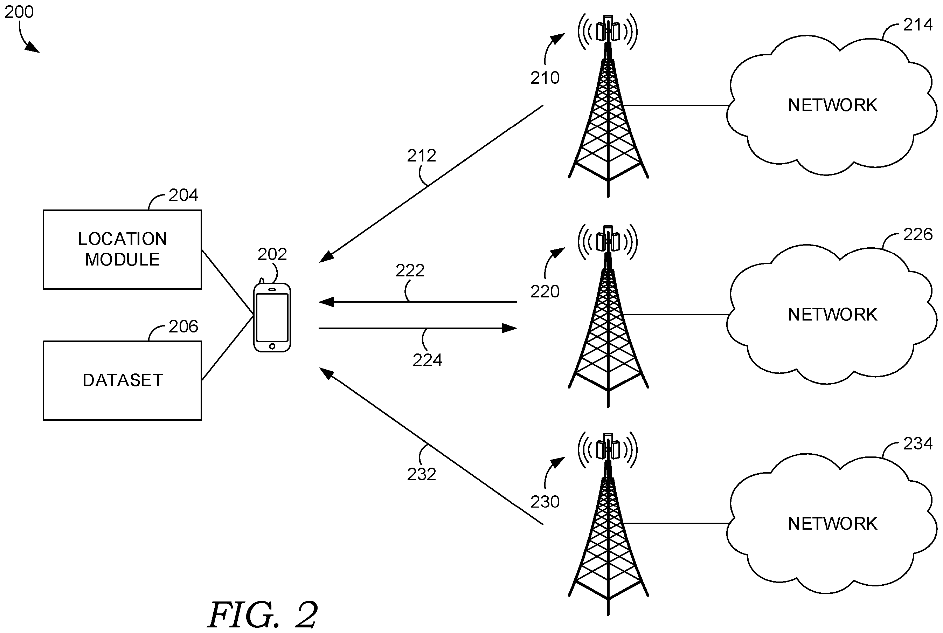

Turning now to Fig. 2, an exemplary network environment is illustrated in which implementations of the present disclosure may be employed. Such a network environment is illustrated and designated generally as network environment 200. At a high level the network environment 200 comprises a UE 202, one or more base stations, and one or more networks. Though the UE 202 is illustrated as a cellular phone, a UE suitable for implementations with the present disclosure may be any computing device having any one or more aspects described with respect to Fig. 1. Similarly, though the one or more base stations are illustrated as macro cells on a cell tower, any scale or form of access point acting as a transceiver station for wirelessly communicating with a UE, including small cells, pico cells, and the like, are suitable for use with the present disclosure.

The network environment 200 comprises one or more base stations to which the UE 202 may potentially connect to (also referred to as `camping on', 'attaching' in the industry). Though the network environment 200 is illustrated with three distinct base stations, one skilled in the art will appreciate that more or fewer base stations may be present in any particular network environment. The one or more base stations of network environment 200 may comprise one or more of a first base station 210, a second base station 220, and a third base station 230. Each of the one or more base stations of the network environment 200 is configured to wirelessly communicate with UEs, such as the UE 202. In aspects, any of the one or more base stations may communicate with a UE using any wireless telecommunication protocol desired by a network operator, including but not limited to 3G, 4G, 5G, 6G, 802.11x and the like. Relevant to the present disclosure, each of the one or more base stations is associated with a network identifier (e.g., a Public Land Mobile Network (PLMN) number). In some implementations, each of the one or more base stations is configured to communicate with one or more UEs located within a geographical area. The geographical area for any particular base station may be referred to as the "coverage area" of the base station or simply the "cell," as used interchangeably hereinafter. In some aspects, the coverage area for each particular base station is defined by an area in which signaling between a particular UE and the base station is usable for any purpose; in other aspects, the coverage area may be defined by mobile network operators. Generally, each base station of the one or more base stations may comprise one or more base transmitter stations, radios, antennas, antenna arrays, power amplifiers, transmitters/receivers, digital signal processors, control electronics, GPS equipment, and the like.

Each base station of the one or more base stations is configured to transmit downlink signals to one or more UEs, such as the UE 202 and to receive uplink signals therefrom. Specifically, the downlink signals from a particular base station may comprise one or more sets of synchronization signals that serve to provide information about that particular base station, such as primary synchronization signals (PSS), secondary synchronization signals (SSS), and physical broadcast channel (PBCH) signals. The downlink signals may additionally comprise various other control and broadcast signaling in addition to physical downlink shared channel (PDSCH) signaling.

Each base station of the one or more base stations may be associated with one or more at least partially distinct networks, wherein each network is associated with one or more network identifiers. Each network may be a telecommunications network(s) (e.g., a packet data network or core network), data network, or portions thereof. A telecommunications network that at least partially comprises the network environment 200 may include additional devices or components (e.g., one or more base stations) not shown. Those devices or components may form network environments similar to what is shown in FIG. 2, and may also perform methods in accordance with the present disclosure. Components such as terminals, links, and nodes (as well as other components) may provide connectivity in various implementations. For the purposes of illustrating the present disclosure, the first base station 210 may be connected to a first network 214, the second base station 220 may be connected to a second network 226, and the third base station 230 may also be connected to the second network 226. Each of the first network 214 and the second network 226 may include multiple networks, as well as being a network of networks, but is shown in more simple form so as to not obscure other aspects of the present disclosure.

In order to connect to any base station, a UE must perform an active search to determine which base stations, if any, it is capable of connecting to. This process is known to many in the art and referred to herein as a `cell search,' and generally comprises acquiring time and frequency synchronization with a cell associated with a base station and detecting an identity of that cell by tuning to one or more specific frequencies, detecting/decoding synchronization signals, detecting/decoding a physical broadcast channel (PBCH), and detecting/decoding the physical downlink shared channel (PDSCH). When performing the cell search, a particular UE typically actively scans frequency bands in which it is capable of communicating for synchronization signals from a base station. Upon detection of synchronization signals from one or more base stations, the UE will perform a cell selection procedure (typically based on best quality of service metrics or finding a cell with a network identifier that matches its own), perform an attachment procedure with the base station, and then being carrying out a wireless communication session. As noted earlier, cell search procedures are often quite taxing on a UE and, if performed constantly, can lead to rapid and undesirable depletion of a UE's battery. In many areas, power generation relied upon for supplying power used to recharge a UE is carbon-based; therefore, in many instances, avoidable power consumption equates to avoidable greenhouse gas emissions. In order to prevent the constant active searching for signals during cell search, and to reduce greenhouse gas emissions caused by power generation, the present disclosure is directed to a targeted cell searching paradigm that eliminates the need for a UE to blindly search all frequencies supported by a UE during cell search.

The UE 202 will perform a targeted a cell search based on a query of a locally-stored dataset using location information determined by the UE 202. Accordingly, the UE 202 may be broadly said to comprise a location module 204 and a locally-stored dataset 206. The location module 204 may be any suitable component or set of components, both hardware and software, that function to provide a location of the UE 202. For example, the location module 204 may be a satellite-based positioning module (e.g., uses the global positioning system (GPS), Galileo, GLONASS, and the like). The location module 204 is generally configured to determine a geographic location of the UE 202. Once the geographic location of the UE 202 is determined, the UE 202 may query the dataset 206 - stored locally on the UE 202 - using the geographic location.

The locally stored dataset 206 comprises one or more targeted cell search parameters associated with a predefined area. For example, if the locally stored dataset 206 is organized by national boundaries, then one or more targeted cell search parameters will be associated with each nation in the dataset 206. In such an example, either the location module 204 may use the geographic location (e.g., a geo-coordinate) to determine which nation the UE 202 is located or the UE 202 may utilize the geographic location information from the location module 204 to determine the nation in which the UE 202 is located. It should be understood that the particular manner of defining an area that is associated with one or more targeted cell search parameters may vary without departing from the present disclosure. Further, the dataset 206 should be locally-available to the UE 202 without a connection to a data network, enabling the dataset 206 to be queried prior to a data connection being established; accordingly, the dataset 206 may be stored in any desirable location on the UE 202 (e.g., in local memory, on a subscriber identity module (SIM) card, and the like). The locally stored dataset 206 may be static (i.e., pre-installed or provisioned on the UE 202 and not modified) or may be updated (e.g., based on an input from a user or a periodic over the air update from a mobile network operator).

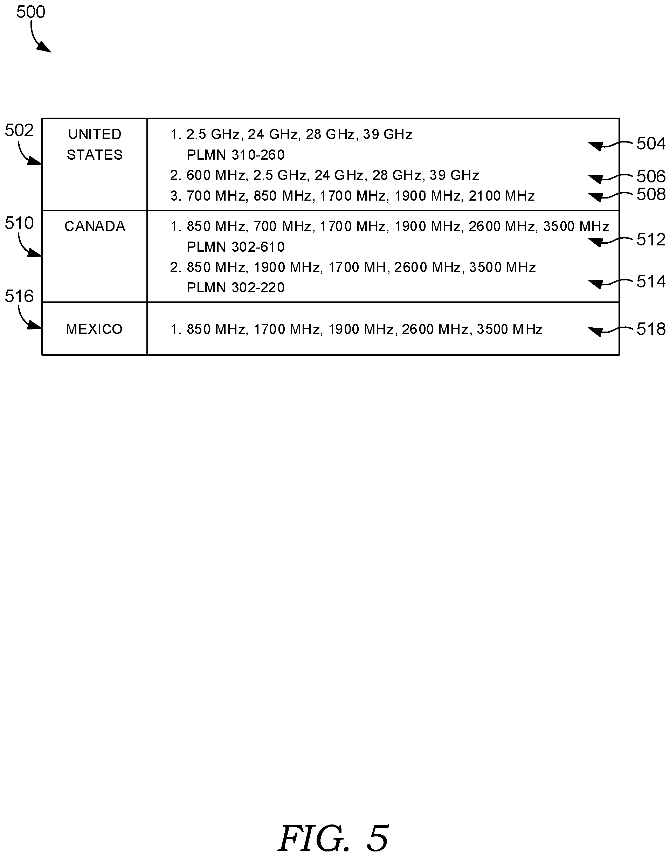

Turning now to Fig. 5, a non-limiting example of the dataset 206 of Fig. 2 is illustrated and designated as table 500. Table 500 generally comprises location information and one or more targeted cell search parameters for each location. For example, the table 500 may include a first location 502 associated with the United States, a second location 510 associated with Canada, and a third location 516 associated with Mexico. Each location may have one or more targeted cell search parameters associated therewith. In one aspect, a location, such as the first location 502, may be associated with a plurality of different targeted cell search parameters that are ranked. That is, if the UE was determined to be positioned at 38°19'59.6"N, 96°41'51.5"W, then the UE may then determine that said position is within the first location 502; based on said determinations, the UE would first perform cell search on a first set of targeted cell search parameters 504 (which, as illustrated may comprise a set of frequencies and a PLMN). If cell search of the first set of targeted cell search parameters 504 was unsuccessful, then the UE would perform cell search of a second set of targeted cell search parameters 506. If cell search of the second set of targeted cell search parameters 506 was unsuccessful, then the UE would perform cell search of a third set of targeted cell search parameters 508. Had the UE been determined to be in the second location 510, then a fourth set of targeted cell search parameters 512 could be used with a fallback to a fifth set of targeted cell search parameters 514. Had the UE been determined to be in the third location 516, then a sixth set of targeted cell search parameters 518 could be used. If none of the targeted cell search parameters associated with a particular location resulted in a successful cell search, then the table 500 may further comprise default or fallback search parameters, such as searching all the frequencies designated by the UE's home PLMN or searching all frequencies supported by the UE.

Returning to Fig. 2, the one or more targeted cell search parameters obtained from the location-based query of the dataset 206 will be used by the UE 202 to perform cell search. Particularly when the UE 202 attempts to perform cell search in a new location or after being idle (e.g., deactivating airplane mode, powering on the device, and the like), the UE 202 may use the geographic location information to query the dataset and identify one or more targeted cell search parameters associated with the geographic location. In aspects, the one or more targeted cell search parameters may be a frequency (e.g., a band, channel, or other frequency range), a radio access technology (RAT), or a network identifier (e.g., a PLMN, an MCC/MNC, and the like). In some aspects the dataset 206 may contain a single cell search parameter associated with a particular location; for example, based on a determination that the UE 202 is located within a particular geographic area, the dataset may comprise a list of frequencies to scan during cell search, wherein the list of frequencies is associated with a PLMN, and wherein the PLMN is associated with a roaming partner associated with the UE 202. In other aspects, the dataset 206 may comprise multiple cell search parameters associated with a particular location; for example, based on a determination that the UE 202 is located within a particular geographic area, the dataset may indicate a list of frequencies to scan for a particular PLMN and a particular RAT, wherein the cell search parameters may cause the 202 to select a particular type of radio access network.

In a non-limiting example, the UE 202 may be triggered to perform a cell search, for example because airplane mode was deactivated after a flight. The UE 202 may utilize the location module 204 to determine a geographic location of the UE 202. Either the location module 204 or the UE 202 may determine that the geographic location of the UE 202 is within a first predefined area (e.g., Germany). The UE 202 may then utilize the geographic location or the predefined area to query the dataset 206, stored locally on the UE 202. As a result of the query of the dataset 206, the UE 202 may identify a first set of frequencies, a first RAT, and a PLMN identifier associated with a first mobile network operator. If the first base station 210 is transmitting a first set of downlink signals 212 (e.g., synchronization signals) on a frequency that is not included in the first set of frequencies, the second base station 220 is transmitting a second set of downlink signals 222 on a frequency that is included in the first set of frequencies, and the third base station 230 is transmitting a third set of downlink signals 232 on a third frequency that is also included in the first set of frequencies, then the UE 202 will perform a cell search by tuning to each of the second set of downlink signals 222 and the third set of downlink signals without tuning to the first set of downlink signals 212. If, after tuning to each of the second set of downlink signals 222 and the third set of downlink signals 232, the UE 202 determines that each of the second base station 230 and the third base station 230 are associated with the first mobile network operator but that the third base station 230 is associated with a second RAT and the second base station 220 is associated with the first RAT, then the UE 202 will select the second base station 220 and communicate a set of uplink signals 224 to the second base station 220 in order that a wireless session may be established. By scanning for the first set of frequencies without scanning for the vast array of frequencies supported by the UE 202 but not included in the first set of frequencies, the UE 202 will expend significantly less processing resources and consume less battery power - reducing the consumption of power supply from a grid that is often supplied by greenhouse gas-producing power generation.

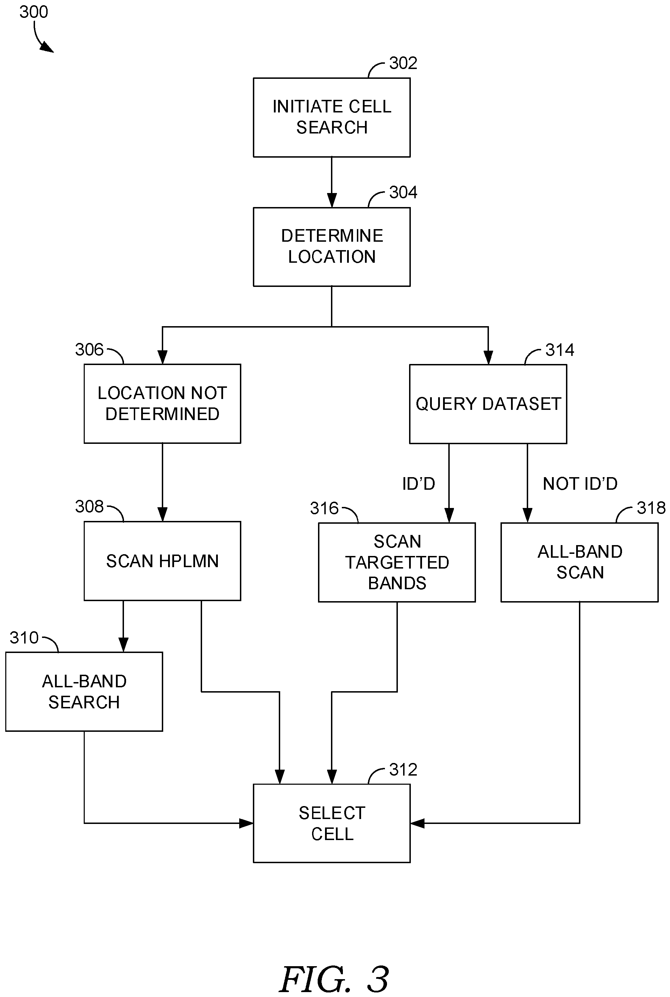

Turning now to Figure 3, a flow chart representing a method 300 is provided. Generally the method 300 may be used by a user equipment (UE), such as the UE 202 of Fig. 2, to perform targeted cell search operations in lieu of default cell search operations of the UE. At a first step 302, cell search is initiated, whether because the UE went from idle mode to active mode, deactivated airplane mode, or for any other suitable reason. At a second step 304, a geographic location is determined according to any one or more aspects discussed with respect to Fig. 2. If a geographic location is successfully determined, then the method 300 proceeds to step 314; else, if the geographic location is not successfully determined, then the method proceeds to step 306. At step 314, a dataset, such as the dataset 206 of Fig. 2, stored locally on the UE, is queried using the geographic location information obtained at step 304 or using a geographic area associated with said geographic location information. If the query of the dataset at step 314 returns one or more cell search parameters, having any one or more aspects of the cell search parameters described with respect to Fig. 2, then the method 300 proceeds to step 316; else, if the query at step 314 does not result in identifying any cell search parameters, then the method proceeds to step 318. At step 316, a targeted cell search is performed using the one or more cell search parameters identified at step 314, according to any one or more aspects described with respect to Fig. 2. At step 318, an all-band cell search is performed, wherein the UE performs a conventional scanning of all frequencies supported by the UE. Regardless of whether a targeted cell search is performed at step 316 or a conventional all-band search is performed at step 318, successful completion of either cell search results in cell selection at step 312. If targeted cell search is unsuccessful at step 316, then the method may proceed to the conventional all-band search at step 318. Returning to step 306, after geographic location information is not determined, the method proceeds to step 308, wherein the UE performs cell search by scanning frequencies associated with its home public land mobile network (HPLMN). If cell search of HPLMN frequencies is unsuccessful, the UE may scan any other known frequencies, and then proceed to a conventional all-band cell search at step 310. Regardless of whether cell search of the HPLMN is successful at step 308 or the conventional all-band cell search is successful at step 310, the method 300 results in cell selection at step 312.

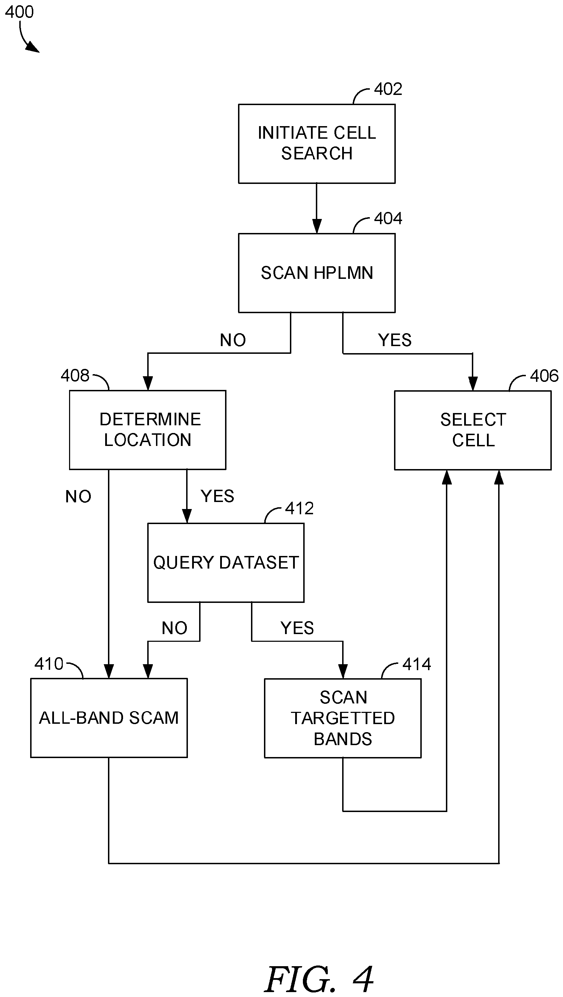

Turning now to Figure 4, a flow chart representing a method 400 is provided. Generally the method 400 may be used by a user equipment (UE), such as the UE 202 of Fig. 2, to perform targeted cell search operations after conventional cell search is performed of a UE's HPLMN. At a first step 402, cell search is initiated, whether because the UE went from idle mode to active mode, deactivated airplane mode, or for any other suitable reason. At a second step 404, the UE performs cell search of its HPLMN. If cell search of the HPLMN is successful at step 404, then the method 400 proceeds to step 406; else, if cell search of the HPLMN is unsuccessful at step 404, then the method 400 proceeds to step 408. At step 408, a geographic location is determined according to any one or more aspects discussed with respect to Fig. 2. If a geographic location is successfully determined, then the method 400 proceeds to step 412; else, if the geographic location is not successfully determined, then the method proceeds to step 410. At step 412, a dataset, such as the dataset 206 of Fig. 2, stored locally on the UE, is queried using the geographic location information obtained at step 408 or using a geographic area associated with said geographic location information. If the query of the dataset at step 412 returns one or more cell search parameters, having any one or more aspects of the cell search parameters described with respect to Fig. 2, then the method 400 proceeds to step 414; else, if the query at step 412 does not result in identifying any cell search parameters, then the method proceeds to step 410. At step 414, a targeted cell search is performed using the one or more cell search parameters identified at step 412, according to any one or more aspects described with respect to Fig. 2. At step 410, an all-band cell search is performed, wherein the UE performs a conventional scanning of all frequencies supported by the UE. Regardless of whether the HPLMN cell search is successful at step 404, the targeted cell search is successful at step 414, or if the conventional all-band cell search is successful at step 410, the method 400 results in cell selection at step 406.

Many different arrangements of the various components depicted, as well as components not shown, are possible without departing from the scope of the claims below. Embodiments in this disclosure are described with the intent to be illustrative rather than restrictive. Alternative embodiments will become apparent to readers of this disclosure after and because of reading it. Alternative means of implementing the aforementioned can be completed without departing from the scope of the claims below. Certain features and subcombinations are of utility and may be employed without reference to other features and subcombinations and are contemplated within the scope of the claims

In the preceding detailed description, reference is made to the accompanying drawings which form a part hereof wherein like numerals designate like parts throughout, and in which is shown, by way of illustration, embodiments that may be practiced. It is to be understood that other embodiments may be utilized and structural or logical changes may be made without departing from the scope of the present disclosure. Therefore, the preceding detailed description is not to be taken in the limiting sense, and the scope of embodiments is defined by the appended claims and their equivalents.

## Claims

1. A system for location-based cell searching, the system comprising:
one or more antennas configured to receive one or more downlink signals from a base station; and
one or more computer processing components configured to perform operations comprising:
determining a location of a user equipment, UE;
querying a dataset stored locally on the UE to identify one or more cell search parameters associated with the location; and
performing a cell search using the one or more cell search parameters.

2. The system of claim 1, wherein the cell search comprises tuning to a set of downlink signals matching the one or more cell search parameters without tuning to downlink signals supported by the UE that do not match the one or more cell search parameters.

3. The system of claim 1, wherein the one or more cell search parameters comprises a set of frequency bands.

4. The system of claim 3, wherein the one or more cell search parameters comprises a public land mobile network identifier and a radio access technology.

5. The system of claim 4, wherein the cell search comprises tuning to a first base station that communicates a first set of downlink signals on a frequency of the set of frequency bands, using the radio access technology, and associated with the PLMN, without tuning to a second base station that communicates a second set of downlink signals with at least one cell search parameter that is different from the one or more cell search parameters.

6. The system of claim 4, wherein the operations further comprise:
determining that the UE failed to decode synchronization signals on the first set of frequency bands;
identifying a second set of frequency bands associated with the location; and
performing a cell search using the second set of frequency bands.

7. The system of claim 1, wherein determining the location of the UE is based on an output from a satellite positioning module.

8. The system of claim 1, wherein the operations further comprise, based on a failure to determine the location of the UE, executing a fallback procedure, and wherein the fallback procedure comprises performing cell search on a fallback set of bands.

9. The system of claim 7, wherein the fallback set of bands is a set of bands in a carrier-defined list or a set of all bands supported by the UE.

10. The system of claim 7, wherein the dataset:
is created in response to an input from a user of the UE; or
is provisioned by a mobile network operator of the UE and wherein the dataset is periodically modified via over the air updates from the mobile network operator or the UE.

11. A method for performing location-based cell searching, the method comprising:
determining a location of a user equipment, UE;
selecting a first predefined area from a plurality of predefined areas, the first predefined area associated with the location of the UE;
querying a dataset stored locally on the UE to identify a first set of frequency bands associated with the first predefined area; and
performing a cell search by tuning to the first set of frequency bands.

12. The method of claim 11, wherein the cell search is performed by tuning to the first set of frequency bands without tuning to a supported frequency not included in the first set of frequency bands, the supported frequency being one of a plurality of frequencies supported by the UE.

13. The method of claim 12, wherein querying the dataset stored locally on the UE further comprises identifying a public land mobile network identifier.

14. The method of claim 13, wherein querying the dataset stored locally on the UE further comprises identifying a radio access technology.

15. A non-transitory computer readable media having instructions stored thereon that, when executed by one or more computer processing components, cause the one or more computer processing components to perform the method of any of claims 11 to 14.
